# EUROPEAN PATENT SPECIFICATION

(11) **EP 3 160 184 B1**
(45) Date of publication and mention of the grant of the patent: **30.10.2019**
(21) Application number: 14895969.5
(22) Date of filing: 22.09.2014
(51) Int. Cl.: H04W 28/10, H04L 12/14, H04L 12/24, H04L 12/859, H04L 12/813, H04L 12/853

(54) **TRAFFIC CONTROL METHOD AND APPARATUS**
VERKEHRSSTEUERUNGSVERFAHREN UND -VORRICHTUNG
PROCÉDÉ ET APPAREIL DE RÉGULATION DE TRAFIC

(30) Priority: 23.06.2014 CN 201410284595
(43) Date of publication of application: 26.04.2017
(73) Proprietor: ZTE Corporation, Shenzhen, Guangdong 518057 (CN)
(72) Inventor: JING, Yunlong, Shenzhen Guangdong 518057 (CN); ZHANG, Xiuli, Shenzhen Guangdong 518057 (CN)
(74) Representative: Aipex B.V.
(86) International application number: PCT/CN2014/087125
(87) International publication number: WO 2015/196599

(56) References cited:
- CN-A- 102 075 897
- CN-A- 102 984 768
- CN-A- 103 716 765
- CN-A- 103 843 374
- US-A1- 2013 176 908
- TEKELEC ET AL: "Discussion paper on Usage-reporting from PCRF to OCS over Sy", 3GPP DRAFT; S2-113302_SY_THE_THER_DIRECTION_DISC_PAPER , 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Naantali; 20110711, 5 July 2011 (2011-07-05), XP050548588, [retrieved on 2011-07-05]

## Description

### Technical Field

The present invention relates to the field of communications, and particularly to a method and apparatus for traffic control.

### Background of the Related Art

Along with rapid development of the mobile communication technology, the requirement for high bandwidth has been satisfied when users use mobile terminals to surf the Internet. For example, in the 3rd Generation Telecommunication (3G) or the 4th Generation Telecommunication (4G) network, the bandwidth can already reach several megabytes and even hundreds of megabytes. However, a problem caused along with network speed boosting is that: if there is a lack of real-time monitoring mechanism for network traffic, it may be possible that the user uses excessive traffic without totally knowing it and is not informed, thus introducing excessive overhead of mobile communication cost.

In the related art, several following charging modes are usually adopted for the network traffic:
(1) an extensive charging mode;
(2) adopting near-real-time settle accounts to call bills; and
(3) performing real-time monitoring through a Gy interface between an Online Charging System (OCS) and a Gateway GPRS Support Node (GGSN)/a Packet Data Network Gateway (PGW).

However, there is a delay phenomenon by adopting near-real-time settle accounts to call bills, which easily causes use of excessive traffic. The Gy interface is mainly used for real-time charging in the 3rd Generation Partnership Project (3GPP) network architecture, and can partially meet the requirement for traffic control; however, the OCS is only for a part of users but cannot consider all users, and it is defined not for traffic control, so the interface cannot meet the requirements for traffic control of all the users.

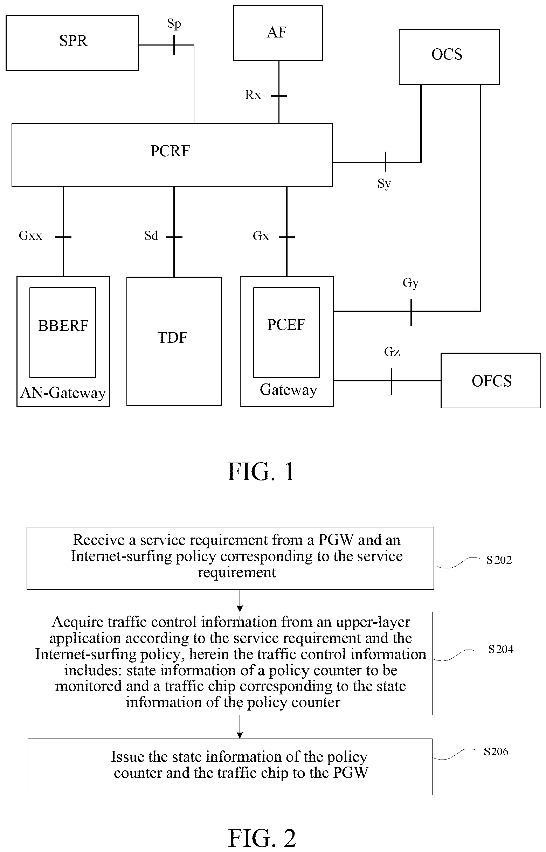

For flexible and diverse Internet applications, the existing technical architecture has been unable to meet the requirement for refined control over user traffic of various industries. The concept of traffic service rule control is presented in 3GPP. FIG. 1 is an architecture diagram of executing policy control by adding an Sy interface in 3GPP according to the related art. As shown in FIG. 1, by adding an Sy interface, it can be required that a Policy and Charging Rules Function (PCRF) reports a current policy counter, which acts as a control capability interface of the OCS for service policies (for example, the OCS can choose which service policy is currently used). However, in the above protocol, the Sy interface is only used for policy control, but does not report traffic and perform the traffic control, that is, if the PCRF does not report, the OCS side cannot control policies. At the same time, the PCRF can still adopt a local policy without being determined by the OCS. An upper-layer service does not have control rights either. Thus, the user side still can use the traffic in the network layer, and the situation of excessive traffic usage still exists. In addition, an upper-layer application or an Application Function (AF) entity can control the PCRF through an Rx interface, but it is only used for issuing policies. Thus, there is still a lack of specific traffic control function.

It can be seen from above that, an Sy protocol itself is only used for report real-time policy monitoring, but cannot issue traffic slices and implement monitoring on a service layer such as AF, etc. The Rx interface is only focused on the related control to source and destination used by the user and the Quality of Service (QoS), but cannot achieve a control of service to traffic.

To sum up, a refined control of application to traffic cannot be achieved in the related art. Consequently, at present the existing extensive traffic control cannot be solved radically.

US 2013/0176908 A1 and the document Tekelec et al., "Discussion paper on usage-reporting from PCRF to OCS over Sy", 3GPP Draft; S2-113302_SY_THE THER_DIRECTION_DISC_PAPER, 3GPP, Mobile Competence Centre; Vol. SA WG2, Sophia-Antipolis, 5 July 2011 disclose the related art of the present invention.

### Content of the Invention

The present invention provides a method and apparatus for traffic control, for at least solving the problem in the related art that a refined control of application to traffic cannot be achieved.

The invention is defined by a method according to claim 1 and an apparatus for traffic control according to claim 4. Further embodiments are defined by the dependent claims.

The method for traffic control according to the invention includes: receiving a service requirement from a PGW and an Internet-surfing policy corresponding to the service requirement; acquiring traffic control information from an upper-layer application according to the service requirement and the Internet-surfing policy, herein the traffic control information includes: state information of a policy counter to be monitored and a traffic slice corresponding to the state information of the policy counter; and issuing the state information of the policy counter and the traffic slice to the PGW.

Acquiring traffic control information from an upper-layer application according to the service requirement and the Internet-surfing policy includes: sending a Spending-Limit-Request (SLR) message to the upper-layer application according to the service requirement and the Internet-surfing policy; and receiving a Spending-Limit-Answer (SLA) message corresponding to the SLR message from the upper-layer application, herein the SLA message carries the traffic control information.

After issuing the state information of the policy counter and the traffic slice to the PGW, the method further includes: receiving a use result of the traffic slice that is reported by the PGW and a service request for applying for a next traffic slice; and reporting the use result of the traffic slice to the upper-layer application, and acquiring the next traffic slice from the upper-layer application according to the service request.

After issuing the state information of the policy counter and the traffic slice to the PGW, the method may further include: when determining that all traffic slices issued to the PGW are used up and the PGW does not apply for a new traffic slice, reporting a use result of the last traffic slice used by the PGW to the upper-layer application, and sending a Session-Termination-Request (STR) message to the upper-layer application; and receiving a Session-Termination-Answer (STA) message from the upper-layer application, and stopping traffic control to the PGW.

After issuing the state information of the policy counter and the traffic slice to the PGW, the method may further include: receiving a Spending-Status-Notification-Request (SNR) message from the upper-layer application, herein the SNR message is used for indicating adjusting the state information of the policy counter and the traffic slice; notifying the PGW to adjust the state information of the policy counter and the traffic slice; and after determining that the PGW completes adjustment of the state information of the policy counter and the traffic slice, returning a Spending-Status-Notification-Answer (SNA) message to the upper-layer application.

The traffic control information is acquired from the upper-layer application through an extended Sy interface. Herein the extended Sy interface includes Usage-Monitoring-Information, and the Usage-Monitoring-Information includes: a Monitoring-Key, which is used for determining the policy counter state information; a Monitoring-Key, which is used for determining the state information of the policy counter; a Granted-Service-Unit, which is used for carrying the traffic slice; a Used-Service-Unit, which is used for reporting the use result of the traffic slice; a Usage-Monitoring-Report, which is used for actively inquiring, by the upper-layer application, the number of used traffic slices; and a Usage-Monitoring-Support, which is used for actively turning off, by the upper-layer application, traffic monitoring.

The apparatus for traffic control according to the invention includes: a first receiving module, arranged to receive a service requirement from a PGW and an Internet-surfing policy corresponding to the service requirement; a first acquiring module, arranged to acquire traffic control information from an upper-layer application according to the service requirement and the Internet-surfing policy, herein the traffic control information includes: state information of a policy counter to be monitored and a traffic slice corresponding to the state information of the policy counter; and an issuing module, arranged to issue the state information of the policy counter and the traffic slice to the PGW.

The first acquiring module includes: a sending unit, arranged to send a Spending-Limit-Request (SLR) message to the upper-layer application according to the service requirement and the Internet-surfing policy; and a receiving unit, arranged to receive a Spending-Limit-Answer (SLA) message corresponding to the SLR message from the upper-layer application, herein the SLA message carries the traffic control information.

The apparatus further includes: a second receiving module, arranged to receive a use result of the traffic slice that is reported by the PGW and a service request for applying for a next traffic slice; and a second acquiring module, arranged to report the use result of the traffic slice to the upper-layer application, and acquire the next traffic slice from the upper-layer application according to the service request.

The apparatus may further include: a sending module, arranged to, when determining that all traffic slices issued to the PGW are used up and the PGW does not apply for a new traffic slice, report a use result of the last traffic slice used by the PGW to the upper-layer application, and send a Session-Termination-Request (STR) message to the upper-layer application; and a third receiving module, arranged to receive a Session-Termination-Answer (STA) message from the upper-layer application, and stop traffic control to the PGW.

The apparatus may further include: a fourth receiving module, arranged to receive a Spending-Status-Notification-Request (SNR) message from the upper-layer application, herein the SNR message is used for indicating adjusting the state information of the policy counter and the traffic slice; a notifying module, arranged to notify the PGW to adjust the state information of the policy counter and the traffic slice; and a feedback module, arranged to, after determining that the PGW completes adjustment of the state information of the policy counter and the traffic slice, return a Spending-Status-Notification-Answer (SNA) message to the upper-layer application.

The first acquiring module is arranged to acquire the traffic control information from the upper-layer application through an extended Sy interface, herein the extended Sy interface includes Usage-Monitoring-Information, and the Usage-Monitoring-Information includes: a Monitoring-Key, which is used for determining the state information of the policy counter; a Granted-Service-Unit, which is used for carrying the traffic slice; a Used-Service-Unit, which is used for reporting the use result of the traffic slice; a Usage-Monitoring-Report, which is used for actively inquiring, by the upper-layer application, the number of used traffic slices; and a Usage-Monitoring-Support, which is used for actively turning off, by the upper-layer application, traffic monitoring.

According to the embodiments of the present invention, the service requirement from the PGW and the Internet-surfing policy corresponding to the service requirement are received; the traffic control information is acquired from the upper-layer application according to the service requirement and the Internet-surfing policy, herein the traffic control information includes: the state information of the policy counter to be monitored and the traffic slice corresponding to the state information of the policy counter; and the state information of the policy counter and the traffic slice are issued to the PGW. In such a manner, the problem in the related art that a refined control of application to traffic cannot be achieved is solved, the technical progress that a refined control of traffic on an application layer is obtained, an effect of opening the traffic control to the upper-layer application is achieved, the unnecessary overhead and investment of the network layer is saved, and the capability of a system to quickly deploy a traffic-refined application is improved.

### Brief Description of Drawings

The accompanying drawings described here are used for providing a further understanding of the present invention, and constitute a part of the present application. Schematic embodiments of the present invention and description thereof are used for illustrating the present invention but not intended to form an improper limit to the present invention. In the accompanying drawings:
FIG. 1 is an architecture diagram of executing policy control by adding an Sy interface in 3GPP according to the related art;
FIG. 2 is a flowchart of a method for traffic control according to an embodiment of the present invention;
FIG. 3 is an architecture diagram of executing traffic control by adding an Sy' interface in 3GPP according to an embodiment of the present invention;
FIG. 4 is a structure diagram of an apparatus for traffic control according to an embodiment of the present invention; and
FIG. 5 is a structure diagram of an apparatus for traffic control according to an alternative embodiment of the present invention.

### Preferred Embodiments of the Present Invention

The present invention is elaborated below with reference to the accompanying drawings and in combination with the embodiments. It is illustrated that, the embodiments and the features in the embodiments of the present application can be combined with each other under the condition of no conflicts.

FIG. 2 is a flowchart of a method for traffic control according to an embodiment of the present invention. As shown in FIG. 2, the method may include the following processing steps.

Step 202: a service requirement from a PGW and an Internet-surfing policy corresponding to the service requirement are received.

Step 204: traffic control information is acquired from an upper-layer application according to the service requirement and the Internet-surfing policy, herein the traffic control information includes: state information of a policy counter to be monitored and a traffic slice corresponding to the state information of the policy counter.

Step 206: the state information of the policy counter and the traffic slice are issued to the PGW.

In the related art, although an Sy interface has been presented in 3GPP, it is mainly used for interactive control of traffic service rules but does not have a related traffic control function; while an Rx interface is mainly used for an AF to control the related bearing of QoS, but not for the traffic control. Thereby, a refined control of application to traffic cannot be achieved in the related art. By using the method as shown in FIG. 2, the state information of the policy counter to be monitored and the traffic slice corresponding to the state information of the policy counter are acquired from the upper-layer application except for the OCS and the OFCS according to the service requirement received from the PGW and the Internet-surfing policy corresponding to the service requirement, and then the acquired state information of the policy counter and the traffic slice are issued to the PGW, so as to implement the requirement for traffic control on an upper-layer service. In such a manner, the problem in the related art that the refined control of application to traffic cannot be achieved is solved, the technical progress that a refined control of traffic on an application layer is obtained, an effect of opening the traffic control to the upper-layer application is achieved, the unnecessary overhead and investment of the network layer is saved, and the capability of a system to quickly deploy a traffic-refined application is improved.

It is illustrated that, in the following embodiments provided by the present invention, the extended Sy protocol is called an Sy' protocol, namely an Sy extended protocol.

The traffic control information is acquired from the upper-layer application through an extended Sy interface, herein the extended Sy interface includes Usage-Monitoring-Information.

The Usage-Monitoring-Information includes, but is not limited to, the following contents:
(1) a Monitoring-Key, which is used for determining the state information of the policy counter;
(2) a Granted-Service-Unit, which is used for carrying the traffic slice;
(3) a Used-Service-Unit, which is used for reporting a use result of the traffic slice;
(4) a Usage-Monitoring-Report, which is used for actively inquiring, by the upper-layer application, the number of used traffic slices; and
(5) a Usage-Monitoring-Support, which is used for actively turning off, by the upper-layer application, traffic monitoring.

In an alternative embodiment, the extended Sy interface can be added between a PCRF and the upper-layer application, and the requirement for traffic control by the upper-layer service can be implemented through the extended Sy protocol. It is needed to reform the related upper-layer application and the PCRF to support the above extended Sy' interface protocol and the related logical processing. A related counter is configured at the PCRF side (the counter can be configured according to different service policies, and a package solution is usually adopted). After the user comes online, the PCRF applies for a traffic counter and a corresponding traffic slice through the extended Sy interface. The upper-layer application controls the subsequent issuing of the counter and the corresponding traffic slice according to an internal logic.

Alternatively, in step 204, the acquiring the traffic control information from the upper-layer application according to the service requirement and the Internet-surfing policy may include the following operations.

Step S1: an SLR message is sent to the upper-layer application according to the service requirement and the Internet-surfing policy.

Step S2: an SLA message corresponding to the SLR message is received from the upper-layer application, herein the SLA message carries the traffic control information.

In an alternative embodiment, the user uses a mobile terminal to surf the Internet. The PGW acquires the Internet-surfing policy and services from the PCRF through a Gx interface. The PCRF acquires the traffic control information from the upper-layer service through the Sy' interface, herein the traffic control information may include, but is not limited to, a counter to be monitored (which is a service that can be carried in a Policy-Counter-Identifier), and adopts the SLR message. The upper-layer service issues the counter to be monitored (Policy-Counter-Statues), and issues the traffic slice (which is carried in an Attribute Value Pair (AVP) of Granted-Service-Unit) at the same time. The PCRF issues a user policy and an available traffic slice to the PGW according to the traffic slice issued by the service and the service requirement.

In step 206, after issuing the state information of the policy counter and the traffic slice to the PGW, the following operations are also included.

Step S3: a use result of the traffic slice that is reported by the PGW and a service request for applying for a next traffic slice are received.

Step S4: the use result of the traffic slice is reported to the upper-layer application, and the next traffic slice is acquired from the upper-layer application according to the service request.

In an embodiment, the upper-layer application issues the traffic slice, and the PCRF and the PGW of the network side allow the user to use the network traffic according to the above traffic slice. After the traffic slice is used up, the PGW and the PCRF need to apply for the next traffic slice through the Sy interface. Only after the new traffic slice is acquired, the user can continue to use the service normally. That is, after using up the currently issued traffic slice, the PGW reports the use result of traffic; the PCRF reports the result of traffic to the upper-layer application through the Sy' interface (for example, the result can be reported through a parameter Used-Service-Unit), and then the upper-layer application continues to issue a new traffic slice.

In step 206, after issuing the state information of the policy counter and the traffic slice to the PGW, the following operations may also be included.

Step S5: when it is determined that all traffic slices issued to the PGW are used up and the PGW does not apply for a new traffic slice, a use result of the last traffic slice used by the PGW is reported to the upper-layer application, and an STR message is sent to the upper-layer application.

Step S6: an STA message is received from the upper-layer application, and the traffic control to the PGW is stopped.

In an embodiment, after the user goes offline when ends the use, the PGW reports the last traffic slice, and the PCRF sends a Session-Termination-Request (STR) message to the upper-layer service, so as to represent that the service is offline, simultaneously reports the use result of the last traffic slice to the upper-layer application. The upper-layer application returns a Session-Termination-Answer (STA) message and performs internal settlement.

Alternatively, in step 206, after issuing the state information of the policy counter and the traffic slice to the PGW, the following operations may also be included.

Step S7: an SNR message is received from the upper-layer application, herein the SNR message is used for indicating adjusting the state information of the policy counter and the traffic slice.

Step S8: the PGW is notified to adjust the state information of the policy counter and the traffic slice.

Step S9: an SNA message is returned to the upper-layer application after it is determined that the PGW completes adjustment of the state information of the policy counter and the traffic slice.

In an alternative embodiment, the upper-layer service can adjust the counter and the corresponding traffic slice (through the SNR message) at any time according to its own service features, and the PCRF issues the corresponding control content to the PGW according to the instruction in the above message, so as to indicate the PGW to adjust correspondingly.

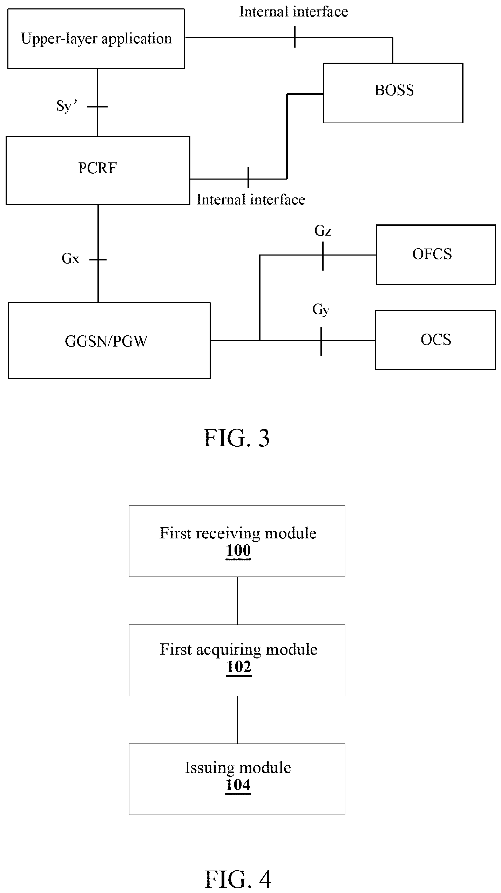

The above alternative implementation processes are further described below in combination with an implementation shown in FIG. 3.

FIG. 3 is an architecture diagram of executing traffic control by adding an Sy' interface in 3GPP according to an embodiment of the present invention. As shown in FIG. 3, the upper-layer can control the PCRF through the Sy' interface and issue the traffic slice through the PCRF, so that the precise control of the traffic used by the user can be achieved. By extending the Sy' interface, it is possible that the upper-layer application can have the capability of controlling the traffic used by the user. The protocol extending mode is as follows.

The protocol extension needs to modify the PCRF side and add the extension to the newly-added parameter Usage-Monitoring-Information and the corresponding logical processing. An Attribute Value Pair (AVP) is extended respectively in the Spending-Limit-Request (SLR) message, the Spending-Limit-Answer (SLA) message, the Spending-Status-Notification-Request (SNR) message and the Spending-Status-Notification-Answer (SNA) message in the standard Sy protocol, namely *[Usage-Monitoring-Information]. herein, *[Usage-Monitoring-Information] may include, but is not limited to, the following contents:
Usage-Monitoring-Information :: = <AVP Header: 1067>
[Monitoring-Key]
[Granted- Service-Unit]
[Used-Service-Unit]
[Usage-Monitoring-Report]
[Usage-Monitoring-Support]
*[AVP]

It is illustrated that, the above Monitoring-Key is an extended AVP for identifying which counter (a certain policy) is subscribed based on the related definition in the Sy protocol.

The Monitoring-Key can be set to be equal to the Policy-Counter-Identifier.

The Granted-Service-Unit is used for the upper-layer service issuing a quotas slice.

The Used-Service-Unit is used for the PCRF reporting the usage.

The Usage-Monitoring-Report is used for carrying the AVP when the upper-layer service hopes to inquire usage actively.

The Usage-Monitoring-Support is used for carrying the AVP when the upper-layer service hopes to turn off usage monitoring actively, and is set as disabled.

FIG. 4 is a structure diagram of an apparatus for traffic control according to an embodiment of the present invention. The apparatus for traffic control can be applied to the PCRF. As shown in FIG. 4, the apparatus for traffic control may include: a first receiving module 100, arranged to receive the service requirement from the PGW and the Internet-surfing policy corresponding to the service requirement; a first acquiring module 102, arranged to acquire the traffic control information from the upper-layer application according to the service requirement and the Internet-surfing policy, herein the traffic control information includes: the state information of the policy counter to be monitored and the traffic slice corresponding to the state information of the policy counter; and an issuing module 104, arranged to issue the state information of the policy counter and the traffic slice to the PGW.

By adopting the apparatus as shown in FIG. 4, the problem in the related art that a refined control of application to traffic cannot be achieved is solved, the technical progress that a refined control of traffic on an application layer is obtained, an effect of opening the traffic control to the upper-layer application is achieved, the unnecessary overhead and investment of the network layer is saved, and the capability of a system to quickly deploy a traffic-refined application is improved.

In an alternative implementation process, the first acquiring module 102 is arranged to acquire the traffic control information from the upper-layer application through the extended Sy interface, herein the extended Sy interface may include Usage-Monitoring-Information.

The Usage-Monitoring-Information may include, but is not limited to, the following contents:
(1) a Monitoring-Key, which is used for determining the state information of the policy counter;
(2) a Granted-Service-Unit, which is used for carrying the traffic slice;
(3) a Used-Service-Unit, which is used for reporting a use result of the traffic slice;
(4) a Usage-Monitoring-Report, which is used for actively inquiring, by the upper-layer application, the number of used traffic slices; and
(5) a Usage-Monitoring-Support, which is used for actively turning off, by the upper-layer application, traffic monitoring.

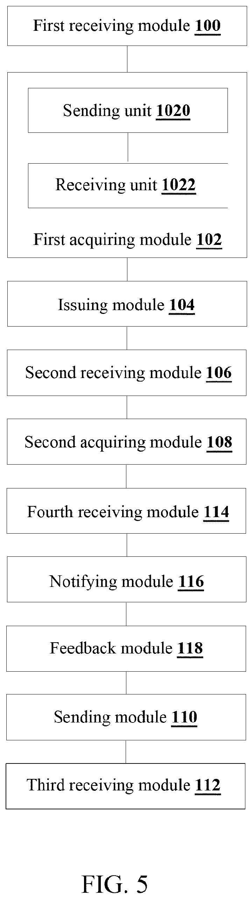

As shown in FIG. 5, the first acquiring module 102 may include: a sending unit 1020, arranged to send the SLR message to the upper-layer application according to the service requirement and the Internet-surfing policy; and a receiving unit 1022, arranged to receive the SLA message corresponding to the SLR message from the upper-layer application, herein the SLA message carries the traffic control information.

As shown in FIG. 5, the apparatus also includes: a second receiving module 106, arranged to receive the use result of the traffic slice that is reported by the PGW and the service request for applying for a next traffic slice; and a second acquiring module 108, arranged to report the use result of the traffic slice to the upper-layer application, and acquire the next traffic slice from the upper-layer application according to the service request.

As shown in FIG. 5, the apparatus may also include: a sending module 110, arranged to, when determining that all traffic slices issued to the PGW are used up and the PGW does not apply for a new traffic slice, report the use result of the last traffic slice used by the PGW to the upper-layer application, and send the STR message to the upper-layer application; and a third receiving module 112, arranged to receive the STA message from the upper-layer application, and stop the traffic control to the PGW.

As shown in FIG. 5, the apparatus may also include: a fourth receiving module, arranged to receive the SNR message from the upper-layer application, herein the SNR message is used for indicating adjusting the state information of the policy counter and the traffic slice; a notifying module 116, arranged to notify the PGW to adjust the state information of the policy counter and the traffic slice; and a feedback module 118, arranged to, after determining that the PGW completes the adjustment of the state information of the policy counter and the traffic slice, return the SNA message to the upper-layer application.

It can be seen from the above description that, the above embodiments achieve the following technical effects (note that, these effects can be achieved by some alternative embodiments): with the technical solution provided by the embodiments of the present invention, by extending the Sy interface, the upper-layer application is enabled to obtain a function of directly controlling the traffic used by the user, and thus the flexible Internet applications can obtain the traffic control of user through the above interface (for example, an application of traffic card and the like). Therefore, the technical progress that a refined control of traffic on an application layer is obtained, an effect of opening the traffic control to the upper-layer application is achieved, the unnecessary overhead and investment of the network layer is saved, and the capability of a system to quickly deploy a traffic-refined application is improved.

It will be apparent to those skilled in the art that, they should understand that the above various modules and steps of the present invention can be implemented by a general-purpose computing device, and they can be centralized in a single computing device or distributed on a network composed of multiple computing devices. Alternatively, they can be implemented by program codes which can be executable by the computing device, so that they can be stored in a storage device and executed by the computing device. In some situations, the presented or described steps can be executed in an order different from the order described here, or they are made into various integrated circuit modules respectively, or multiple modules and steps of them are made into a single integrated circuit module to realize. In this way, the present invention is not limited to any particular combination of hardware and software.

The above is only the alternative embodiments of the present invention and not intended to limit the present invention..

### Industrial Applicability

As abovementioned, a method and apparatus for traffic control provided by the embodiments of the present invention have the following beneficial effects: by extending the Sy interface, the upper-layer application is enabled to obtain a function of directly controlling the traffic used by the user, thereby, the technical progress that a refined control of traffic on an application layer is obtained, an effect of opening the traffic control to the upper-layer application is achieved, the unnecessary overhead and investment of the network layer is saved, and the capability of a system to quickly deploy a traffic-refined application is improved.

## Claims

1. A method for traffic control, performed by a Policy and Charging Rules Function, PCRF, said method comprising:
receiving (S202) a service requirement from a Packet Data Network Gateway, PGW, and an Internet-surfing policy corresponding to the service requirement;
acquiring (S204) traffic control information from an upper-layer application according to the service requirement and the Internet-surfing policy, wherein the traffic control information is acquired from the upper-layer application through an extended Sy interface, wherein the traffic control information comprises: state information of a policy counter to be monitored and a traffic slice corresponding to the state information of the policy counter; and
issuing (S206) the state information of the policy counter and the traffic slice to the PGW,
wherein acquiring traffic control information from an upper-layer application according to the service requirement and the Internet-surfing policy comprises:
sending a Spending-Limit-Request, SLR, message to the upper-layer application according to the service requirement and the Internet-surfing policy; and
receiving a Spending-Limit-Answer, SLA, message corresponding to the SLR message from the upper-layer application, wherein the SLA message carries the traffic control information,
wherein, after issuing the state information of the policy counter and the traffic slice to the PGW, the method further comprises:
receiving a use result of the traffic slice that is reported by the PGW and a service request for applying for a next traffic slice, wherein the use result is received after the traffic slice is used up; and
reporting, through the extended Sy interface, the use result of the traffic slice to the upper-layer application, and acquiring, through the extended Sy interface, the next traffic slice from the upper-layer application according to the service request,
wherein the extended Sy interface comprises Usage-Monitoring-Information, and the Usage-Monitoring-Information comprises:
a Monitoring-Key, which is used for determining the state information of the policy counter;
a Granted-Service-Unit, which is used for carrying the traffic slice;
a Used-Service-Unit, which is used for reporting the use result of the traffic slice;
a Usage-Monitoring-Report, which is used for actively inquiring, by the upper-layer application, the number of used traffic slices; and
a Usage-Monitoring-Support, which is used for actively turning off, by the upper-layer application, traffic monitoring.

2. The method according to claim 1, wherein, after issuing the state information of the policy counter and the traffic slice to the PGW, the method further comprises:
when determining that all traffic slices issued to the PGW are used up and the PGW does not apply for a new traffic slice, reporting a use result of the last traffic slice used by the PGW to the upper-layer application, and sending a Session-Termination-Request, STR, message to the upper-layer application; and
receiving a Session-Termination-Answer, STA, message from the upper-layer application, and stopping traffic control to the PGW.

3. The method according to claim 2, wherein, after issuing the state information of the policy counter and the traffic slice to the PGW, the method further comprises:
receiving a Spending-Status-Notification-Request, SNR, message from the upper-layer application, wherein the SNR message is used for indicating adjusting the state information of the policy counter and the traffic slice;
notifying the PGW to adjust the state information of the policy counter and the traffic slice; and
after determining that the PGW completes adjustment of the state information of the policy counter and the traffic slice, returning a Spending-Status-Notification-Answer, SNA, message to the upper-layer application.

4. An apparatus for traffic control, said apparatus being a Policy and Charging Rules Function, PCRF, said apparatus comprising:
a first receiving module (100), arranged to receive a service requirement from a Packet Data Network Gateway, PGW, and an Internet-surfing policy corresponding to the service requirement;
a first acquiring module (102), arranged to acquire traffic control information from an upper-layer application according to the service requirement and the Internet-surfing policy, wherein the traffic control information is acquired from the upper-layer application through an extended Sy interface, wherein the traffic control information comprises: state information of a policy counter to be monitored and a traffic slice corresponding to the state information of the policy counter; and
an issuing module (1024), arranged to issue the state information of the policy counter and the traffic slice to the PGW,
wherein the first acquiring module (102) comprises:
a sending unit (1020), arranged to send a Spending-Limit-Request, SLR, message to the upper-layer application according to the service requirement and the Internet-surfing policy; and
a receiving unit (1022), arranged to receive a Spending-Limit-Answer, SLA, message corresponding to the SLR message from the upper-layer application, wherein the SLA message carries the traffic control information;
a second receiving module (106), arranged to receive a use result of the traffic slice that is reported by the PGW and a service request for applying for a next traffic slice, wherein the use result is received after the traffic slice is used up; and
a second acquiring module (108), arranged to report, through the extended Sy interface, the use result of the traffic slice to the upper-layer application, and acquire, through the extended Sy interface, the next traffic slice from the upper-layer application according to the service request,
wherein the extended Sy interface comprises Usage-Monitoring-Information, and the Usage-Monitoring-Information comprises:
a Monitoring-Key, which is used for determining the state information of the policy counter;
a Granted-Service-Unit, which is used for carrying the traffic slice;
a Used-Service-Unit, which is used for reporting the use result of the traffic slice;
a Usage-Monitoring-Report, which is used for actively inquiring, by the upper-layer application, the number of used traffic slices; and
a Usage-Monitoring-Support, which is used for actively turning off, by the upper-layer application, traffic monitoring.

5. The apparatus according to claim 4, further comprising:
a sending module (110), arranged to, when determining that all traffic slices issued to the PGW are used up and the PGW does not apply for a new traffic slice, report a use result of the last traffic slice used by the PGW to the upper-layer application, and send a Session-Termination-Request, STR, message to the upper-layer application; and
a third receiving module (112), arranged to receive a Session-Termination-Answer, STA, message from the upper-layer application, and stop traffic control to the PGW.

6. The apparatus according to claim 5, further comprising:
a fourth receiving module (114), arranged to receive a Spending-Status-Notification-Request, SNR, message from the upper-layer application, wherein the SNR message is used for indicating adjusting the state information of the policy counter and the traffic slice;
a notifying module (116), arranged to notify the PGW to adjust the state information of the policy counter and the traffic slice; and
a feedback module (118), arranged to, after determining that the PGW completes adjustment of the state information of the policy counter and the traffic slice, return a Spending-Status-Notification-Answer, SNA, message to the upper-layer application.

## Patentansprüche

1. Verfahren zur Verkehrssteuerung, durchgeführt von einer Richtlinien- und Gebührenregeln-Funktion, PCRF (Policy and Charging Rules Function), wobei das Verfahren Folgendes umfasst:
Empfangen (S202) einer Dienstanforderung von einem Paketdaten-Netzwerk-Gateway, PGW, und von der Dienstanforderung entsprechenden Richtlinien für das Surfen im Internet;
Erhalten (S204) von Verkehrssteuerungsinformationen von einer Anwendung einer höheren Schicht gemäß der Dienstanforderung und den Richtlinien für das Surfen im Internet, wobei die Verkehrssteuerungsinformationen durch eine erweiterte Sy-Schnittstelle von der Anwendung der höheren Schicht erhalten werden, wobei die Verkehrssteuerungsinformationen Folgendes umfassen: Zustandsinformationen eines zu überwachenden Richtlinienzählers und ein Verkehrssegment, das den Zustandsinformationen des Richtlinienzählers entspricht; und
Ausgeben (S206) der Zustandsinformationen des Richtlinienzählers und des Verkehrssegments an das PGW,
wobei das Erhalten der Verkehrssteuerungsinformationen von einer Anwendung einer höheren Schicht gemäß der Dienstanforderung und den Richtlinien für das Surfen im Internet Folgendes umfasst:
Senden einer Nachricht mit einer Ausgabenobergrenzenanforderung, SLR (Spending-Limit-Request), an die Anwendung der höheren Schicht gemäß der Dienstanforderung und den Richtlinien für das Surfen im Internet; und
Empfangen einer Nachricht mit einer Ausgabenobergrenzenantwort, SLA (Spending-Limit-Answer), die der SLR-Nachricht entspricht, von der Anwendung der höheren Schicht, wobei die SLA-Nachricht die Verkehrssteuerungsinformationen trägt,
wobei das Verfahren nach dem Ausgeben der Zustandsinformationen des Richtlinienzählers und des Verkehrssegments an das PGW ferner Folgendes umfasst:
Empfangen eines Nutzungsergebnisses des Verkehrssegments, das von dem PGW gemeldet wird, und einer Dienstanforderung zum Beantragen eines nächsten Verkehrssegments, wobei das Nutzungsergebnis empfangen wird, nachdem das Verkehrssegment aufgebraucht ist; und
Melden des Nutzungsergebnisses des Verkehrssegments an die Anwendung der höheren Schicht über die erweitere Sy-Schnittstelle und Erhalten des nächsten Verkehrssegments von der Anwendung der höheren Schicht über die erweiterte Sy-Schnittstelle gemäß der Dienstanforderung,
wobei die erweiterte Sy-Schnittstelle Nutzungsüberwachungsinformationen umfasst und die Nutzungsüberwachungsinformationen Folgendes umfassen:
einen Überwachungsschlüssel, der zum Bestimmen der Zustandsinformationen des Richtlinienzählers verwendet wird;
eine Genehmigte-Dienste-Einheit, die zum Tragen des Verkehrssegments verwendet wird,
eine Genutzte-Dienste-Einheit, die zum Melden des Nutzungsergebnisses des Verkehrssegments verwendet wird;
eine Nutzungsüberwachungsmeldung, die zur aktiven Erfragung der Anzahl an genutzten Verkehrssegmenten durch die Anwendung der höheren Schicht verwendet wird; und
eine Nutzungsüberwachungsunterstützung, die zum aktiven Abschalten der Verkehrsüberwachung durch die Anwendung der höheren Schicht verwendet wird.

2. Verfahren nach Anspruch 1, wobei das Verfahren nach dem Ausgeben der Zustandsinformationen des Richtlinienzählers und des Verkehrssegments an das PGW ferner Folgendes umfasst:
Melden eines Nutzungsergebnisses des letzten vom PGW genutzten Verkehrssegments an die Anwendung der höheren Schicht, wenn bestimmt wird, dass alle an das PGW ausgegebenen Verkehrssegmente aufgebraucht sind und das PGW kein neues Verkehrssegment beantragt, und Senden einer Nachricht mit einer Sitzungsbeendingungsanforderung, STR (Session-Termination-Request), an die Anwendung der höheren Schicht; und
Empfangen einer Nachricht mit einer Sitzungsbeendigungsantwort, STA (Session-Termination-Answer), von der Anwendung der höheren Schicht und Beenden der Verkehrssteuerung zum PGW.

3. Verfahren nach Anspruch 2, wobei das Verfahren nach dem Ausgeben der Zustandsinformationen des Richtlinienzählers und des Verkehrssegments an das PGW ferner Folgendes umfasst:
Empfangen einer Nachricht mit einer Ausgabenstatusbenachrichtigungsanforderung, SNR (Spending-Status-Notification-Request), von der Anwendung der höheren Schicht, wobei die SNR-Nachricht zum Angeben einer Anpassung der Zustandsinformationen des Richtlinienzählers und des Verkehrssegments verwendet wird;
Benachrichtigen des PGW, damit dieses die Zustandsinformationen des Richtlinienzählers und das Verkehrssegment anpasst; und
nachdem bestimmt wurde, dass das PGW die Anpassung der Zustandsinformationen des Richtlinienzählers und des Verkehrssegments vornimmt, Zurücksenden einer Nachricht mit einer Ausgabenstatusbenachrichtigungsantwort, SNA (Spending-Status-Notification-Answer) an die Anwendung der höheren Schicht.

4. Vorrichtung zur Verkehrssteuerung, wobei es sich bei der Vorrichtung um eine Richtlinien- und Gebührenregeln-Funktion, PCRF, handelt, wobei die Vorrichtung Folgendes umfasst:
ein erstes Empfangsmodul (100), das dazu eingerichtet ist, eine Dienstanforderung von einem Paketdaten-Netzwerk-Gateway, PGW, und der Dienstanforderung entsprechende Richtlinien für das Surfen im Internet zu empfangen;
ein erstes Erhaltungsmodul (102), das dazu eingerichtet ist, Verkehrssteuerungsinformationen gemäß der Dienstanforderung und den Richtlinien für das Surfen im Internet von einer Anwendung einer höheren Schicht zu erhalten, wobei die Verkehrssteuerungsinformationen von der Anwendung der höheren Schicht über eine erweiterte Sy-Schnittstelle erhalten werden, wobei die Verkehrssteuerungsinformationen Folgendes umfassen: Zustandsinformationen eines zu überwachenden Richtlinienzählers und ein Verkehrssegment, das den Zustandsinformationen des Richtlinienzählers entspricht; und
ein Ausgabemodul (1024), das dazu eingerichtet ist, die Zustandsinformationen des Richtlinienzählers und das Verkehrssegment an das PGW auszugeben,
wobei das erste Erhaltungsmodul (102) Folgendes umfasst:
eine Sendeeinheit (1020), die dazu eingerichtet ist, eine Nachricht mit einer Ausgabenobergrenzenanforderung, SLR, gemäß der Dienstanforderung und den Richtlinien für das Surfen im Internet an die Anwendung der höheren Schicht zu senden; und
eine Empfangseinheit (1022), die dazu eingerichtet ist, eine Nachricht mit einer Ausgabenobergrenzenantwort, SLA, die der SLR-Nachricht entspricht, von der Anwendung der höheren Schicht zu empfangen, wobei die SLA-Nachricht die Verkehrssteuerungsinformationen trägt;
ein zweites Empfangsmodul (106), das dazu eingerichtet ist, ein Nutzungsergebnis des Verkehrssegments, das von dem PGW gemeldet wird, und eine Dienstanforderung zum Beantragen eines nächsten Verkehrssegments zu empfangen, wobei das Nutzungsergebnis empfangen wird, nachdem das Verkehrssegment aufgebraucht ist; und
ein zweites Erhaltungsmodul (108), das dazu eingerichtet ist, das Nutzungsergebnis des Verkehrssegments über die erweiterte Sy-Schnittstelle der Anwendung der höheren Schicht zu melden und das nächste Verkehrssegment über die erweiterte Sy-Schnittstelle gemäß der Dienstanforderung von der Anwendung der höheren Schicht zu erhalten;
wobei die erweiterte Sy-Schnittstelle Nutzungsüberwachungsinformationen umfasst und die Nutzungsüberwachungsinformationen Folgendes umfassen:
einen Überwachungsschlüssel, der zum Bestimmen der Zustandsinformationen des Richtlinienzählers verwendet wird;
eine Genehmigte-Dienste-Einheit, die zum Tragen des Verkehrssegments verwendet wird,
eine Genutzte-Dienste-Einheit, die zum Melden des Nutzungsergebnisses des Verkehrssegments verwendet wird;
eine Nutzungsüberwachungsmeldung, die zur aktiven Erfragung der Anzahl an genutzten Verkehrssegmenten durch die Anwendung der höheren Schicht verwendet wird; und
eine Nutzungsüberwachungsunterstützung, die zum aktiven Abschalten der Verkehrsüberwachung durch die Anwendung der höheren Schicht verwendet wird.

5. Vorrichtung nach Anspruch 4, ferner umfassend:
ein Sendemodul (110), das dazu eingerichtet ist, ein Nutzungsergebnis des letzten vom PGW genutzten Verkehrssegments der Anwendung der höheren Schicht zu melden, wenn bestimmt wird, dass alle an das PGW ausgegebenen Verkehrssegmente aufgebraucht sind und das PGW kein neues Verkehrssegment beantragt, und eine Nachricht mit einer Sitzungsbeendigungsanforderung, STR, an die Anwendung der höheren Schicht zu senden; und
ein drittes Empfangsmodul (112), das dazu eingerichtet ist eine Nachricht mit einer Sitzungsbeendigungsantwort, STA, von der Anwendung der höheren Schicht zu empfangen und die Verkehrssteuerung zum PGW zu beenden.

6. Vorrichtung nach Anspruch 5, ferner umfassend:
ein viertes Empfangsmodul (114), das dazu eingerichtet ist, eine Nachricht mit einer Ausgabenstatusbenachrichtigungsanforderung, SNR, von der Anwendung der höheren Schicht zu empfangen, wobei die SNR-Nachricht zum Angeben einer Anpassung der Zustandsinformationen des Richtlinienzählers und des Verkehrssegments verwendet wird;
ein Benachrichtigungsmodul (116), das dazu eingerichtet ist, das PGW zu benachrichtigen, damit es die Zustandsinformationen des Richtlinienzählers und das Verkehrssegment anpasst; und
ein Rückmeldungsmodul (118), das dazu eingerichtet ist, eine Nachricht mit einer Ausgabenstatusbenachrichtigungsantwort, SNA, an die Anwendung der höheren Schicht zurückzusenden, nachdem bestimmt wurde, dass das PGW die Anpassung der Zustandsinformationen des Richtlinienzählers und des Verkehrssegments vornimmt.

## Revendications

1. Procédé de régulation de trafic, réalisé par une fonction de règles de politique et de facturation, PCRF, ledit procédé comprenant :
la réception (S202) d'une exigence de service à partir d'une passerelle de réseau de données par paquets, PGW, et d'une politique de navigation sur Internet correspondant à l'exigence de service ;
l'acquisition (S204) d'informations de régulation de trafic à partir d'une application de couche supérieure conformément à l'exigence de service et à la politique de navigation sur Internet, dans lequel les informations de régulation de trafic sont acquises à partir de l'application de couche supérieure à travers une interface Sy étendue, dans lequel les informations de régulation de trafic comprennent : des informations d'état d'un compteur basé sur la politique à surveiller et une tranche de trafic correspondant aux informations d'état du compteur basé sur la politique ; et
l'émission (S206) des informations d'état du compteur basé sur la politique et de la tranche de trafic vers la PGW,
dans lequel l'acquisition d'informations de régulation de trafic à partir d'une application de couche supérieure conformément à l'exigence de service et à la politique de navigation sur Internet comprend :
l'envoi d'un message de demande de limite de dépenses, SLR, à l'application de couche supérieure conformément à l'exigence de service et à la politique de navigation sur Internet ; et
la réception d'un message de réponse de limite de dépenses, SLA, correspondant au message SLR à partir de l'application de couche supérieure, dans lequel le message SLA porte les informations de régulation de trafic,
dans lequel, après l'émission des informations d'état du compteur basé sur la politique et de la tranche de trafic vers la PGW, le procédé comprend en outre :
la réception d'un résultat d'utilisation de la tranche de trafic qui est rapporté par la PGW et d'une demande de service pour solliciter une tranche de trafic suivante, dans lequel le résultat d'utilisation est reçu après que la tranche de trafic est consommée ; et
le rapport, à travers l'interface Sy étendue, du résultat d'utilisation de la tranche de trafic à l'application de couche supérieure et l'acquisition, à travers l'interface Sy étendue, de la tranche de trafic suivante à partir de l'application de couche supérieure conformément à la demande de service,
dans lequel l'interface Sy étendue comprend des informations de surveillance d'utilisation, et les informations de surveillance d'utilisation comprennent :
une clé de surveillance, qui est utilisée pour déterminer les informations d'état du compteur basé sur la politique ;
une unité de service accordé, qui est utilisée pour porter la tranche de trafic ;
une unité de service utilisé, qui est utilisée pour rapporter le résultat d'utilisation de la tranche de trafic ;
un rapport de surveillance d'utilisation, qui est utilisé pour interroger activement, par l'application de couche supérieure, le nombre de tranches de trafic utilisées ; et
un support de surveillance d'utilisation, qui est utilisé pour interrompre activement, par l'application de couche supérieure, la surveillance du trafic.

2. Procédé selon la revendication 1, dans lequel, après l'émission des informations d'état du compteur basé sur la politique et de la tranche de trafic vers la PGW, le procédé comprend en outre :
lors de la détermination que toutes les tranches de trafic émises vers la PGW sont consommées et que la PGW ne sollicite pas de nouvelle tranche de trafic, le rapport d'un résultat d'utilisation de la dernière tranche de trafic utilisée par la PGW à l'application de couche supérieure, et l'envoi d'un message de demande de fin de session, STR, à l'application de couche supérieure ; et
la réception d'un message de réponse de fin de session, STA, à partir de l'application de couche supérieure et l'arrêt de la régulation de trafic vers la PGW.

3. Procédé selon la revendication 2, dans lequel, après l'émission des informations d'état du compteur basé sur la politique et de la tranche de trafic vers la PGW, le procédé comprend en outre :
la réception d'un message de demande de notification d'état des dépenses, SNR, à partir de l'application de couche supérieure, dans lequel le message SNR est utilisé pour indiquer le réglage des informations d'état du compteur basé sur la politique et de la tranche de trafic ;
la notification à la PGW de régler les informations d'état du compteur basé sur la politique et de la tranche de trafic ; et après la détermination que la PGW achève le réglage des informations d'état du compteur basé sur la politique et de la tranche de trafic, le renvoi d'un message de réponse de notification d'état des dépenses, SNA, à l'application de couche supérieure.

4. Appareil de régulation de trafic, ledit appareil étant une fonction de règles de politique et de facturation, PCRF, ledit appareil comprenant :
un premier module de réception (100), conçu pour recevoir une exigence de service à partir d'une passerelle de réseau de données par paquets, PGW, et une politique de navigation sur Internet correspondant à l'exigence de service ;
un premier module d'acquisition (102), conçu pour acquérir des informations de régulation de trafic à partir d'une application de couche supérieure conformément à l'exigence de service et à la politique de navigation sur Internet, dans lequel les informations de régulation de trafic sont acquises à partir de l'application de couche supérieure à travers une interface Sy étendue, dans lequel les informations de régulation de trafic comprennent : des informations d'état d'un compteur basé sur la politique à surveiller et une tranche de trafic correspondant aux informations d'état du compteur basé sur la politique ; et
un module d'émission (1024), conçu pour émettre les informations d'état du compteur basé sur la politique et de la tranche de trafic vers la PGW,
dans lequel le premier module d'acquisition (102) comprend :
une unité d'envoi (1020), conçue pour envoyer un message de demande de limite de dépenses, SLR, à l'application de couche supérieure conformément à l'exigence de service et à la politique de navigation sur Internet ; et
une unité de réception (1022), conçue pour recevoir un message de réponse de limite de dépenses, SLA, correspondant au message SLR à partir de l'application de couche supérieure, dans lequel le message SLA porte les informations de régulation de trafic ;
un deuxième module de réception (106), conçu pour recevoir un résultat d'utilisation de la tranche de trafic qui est rapporté par la PGW et une demande de service pour solliciter une tranche de trafic suivante, dans lequel le résultat d'utilisation est reçu après que la tranche de trafic est consommée ; et
un second module d'acquisition (108), conçu pour rapporter, à travers l'interface Sy étendue, le résultat d'utilisation de la tranche de trafic à l'application de couche supérieure et acquérir, à travers l'interface Sy étendue, la tranche de trafic suivante à partir de l'application de couche supérieure conformément à la demande de service,
dans lequel l'interface Sy étendue comprend des informations de surveillance d'utilisation, et les informations de surveillance d'utilisation comprennent :
une clé de surveillance, qui est utilisée pour déterminer les informations d'état du compteur basé sur la politique ;
une unité de service accordé, qui est utilisée pour porter la tranche de trafic ;
une unité de service utilisé, qui est utilisée pour rapporter le résultat d'utilisation de la tranche de trafic ;
un rapport de surveillance d'utilisation, qui est utilisé pour interroger activement, par l'application de couche supérieure, le nombre de tranches de trafic utilisées ; et
un support de surveillance d'utilisation, qui est utilisé pour interrompre activement, par l'application de couche supérieure, la surveillance du trafic.

5. Appareil selon la revendication 4, comprenant en outre :
un module d'envoi (110), conçu pour, lors de la détermination que toutes les tranches de trafic émises vers la PGW sont consommées et que la PGW ne sollicite pas de nouvelle tranche de trafic, rapporter un résultat d'utilisation de la dernière tranche de trafic utilisée par la PGW à l'application de couche supérieure, et envoyer un message de demande de fin de session, STR, à l'application de couche supérieure ; et
un troisième module de réception (112), conçu pour recevoir un message de réponse de fin de session, STA, à partir de l'application de couche supérieure et arrêter la régulation de trafic vers la PGW.

6. Appareil selon la revendication 5, comprenant en outre :
un quatrième module de réception (114), conçu pour recevoir un message de demande de notification d'état des dépenses, SNR, à partir de l'application de couche supérieure, dans lequel le message SNR est utilisé pour indiquer le réglage des informations d'état du compteur basé sur la politique et de la tranche de trafic ;
un module de notification (116), conçu pour notifier à la PGW de régler les informations d'état du compteur basé sur la politique et de la tranche de trafic ; et
un module de rétroaction (118), conçu pour, après la détermination que la PGW achève le réglage des informations d'état du compteur basé sur la politique et de la tranche de trafic, renvoyer un message de réponse de notification d'état des dépenses, SNA, à l'application de couche supérieure.
